# EUROPÄISCHE PATENTANMELDUNG

(11) **EP 3 667 123 A1**
(43) Veröffentlichungstag der Anmeldung: **17.06.2020**
(21) Anmeldenummer: 19215064.7
(22) Anmeldetag: 11.12.2019
(51) Int. Cl.: F16H 49/00, H02K 7/116

(54) **AKTUATORSYSTEM**

(30) Priorität: 11.12.2018 LU 101035
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Aktuatorsystem, das einen Aktuator beinhaltet, der einen Elektromotor und ein dem Elektromotor triebtechnisch nachgeschaltetes Spannungswellengetriebe aufweist. Das Aktuatorsystem weist ein Aktuatorsystemgehäuse, aus dem eine Hauptabtriebswelle geführt ist, und ein Aktuatorgehäuse auf, wobei das Aktuatorsystemgehäuse das Aktuatorgehäuse vollständig einhaust und wobei der Elektromotor und das ihm nachgeschaltete Spannungswellengetriebe in dem Aktuatorgehäuse angeordnet sind und wobei wenigsten eine Aktuatorsystemkomponente außerhalb des Aktuatorgehäuses in dem Aktuatorsystemgehäuse angeordnet ist.

## Beschreibung

Die Erfindung betrifft ein Aktuatorsystem, das einen Aktuator beinhaltet, der einen Elektromotor und ein dem Elektromotor triebtechnisch nachgeschaltetes Spannungswellengetriebe aufweist.

Aktuatorsysteme der eingangs genannten Art sind in unterschiedlichen Bauformen bekannt.

Aus WO 00/34108 ist eine elektromotorische Servolenkung bekannt, bei der ein Elektromotor über ein Spannungswellengetriebe an einen Zahnstangenantrieb angekoppelt ist. Der Elektromotor ist innerhalb des Flexsplines des Spannungswellengetriebes angeordnet.

Es ist die Aufgabe der vorliegenden Erfindung, ein Aktuatorsystem anzugeben, das besonders robust ausbildbar und flexibel einsetzbar ist.

Die Aufgabe wird durch ein Aktuatorsystem der eingangs genannten Art gelöst, das dadurch gekennzeichnet ist, dass das Aktuatorsystem ein Aktuatorsystemgehäuse, aus dem eine Hauptabtriebswelle geführt ist, und ein Aktuatorgehäuse aufweist, wobei das Aktuatorsystemgehäuse das Aktuatorgehäuse vollständig einhaust und wobei der Elektromotor und das ihm nachgeschaltete Spannungswellengetriebe in dem Aktuatorgehäuse angeordnet sind und wobei wenigstens eine Aktuatorsystemkomponente außerhalb des Aktuatorgehäuses in dem Aktuatorsystemgehäuse angeordnet ist.

Die Erfindung hat den ganz besonderen Vorteil, dass der Elektromotor und das ihm nachgeschaltete Spannungswellengetriebe besonders gut geschützt in einer eigenen Umgebung, beispielsweise in einem Schmieröl, separat von Aktuatorsystemkomponenten, wie beispielsweise einer elektronischen Steuerungsvorrichtung für den Elektromotor, untergebracht sein können. Die Erfindung bietet ganz allgemein den Vorteil, dass das Aktuatorgehäuse mit einem anderen Fluid gefüllt sein kann, als der übrige Teil des Aktuatorsystemgehäuses.

Die Verwendung eines Spannungswellengetriebes hat den besonderen Vorteil, dass eine gute Steifigkeit des Aktuatorsystems erreicht wird. Dies bedeutet, dass die Hauptabtriebswelle wenig oder kein Spiel hat, wenn der Antrieb (Elektromotorabtrieb) festgehalten wird. Insbesondere wird außerdem eine hohe Genauigkeit und (abgesehen von dem Spiel eventuell nachgeschalteter Getriebe) eine besondere Spielfreiheit erreicht.

Es kann eine Abtriebswelle, insbesondere eine Abtriebswelle des Spannungswellengetriebes, vorhanden sein, die durch eine Wandung des Aktuatorgehäuses hindurch verläuft. Insbesondere kann auch vorgesehen sein, dass die Abtriebswelle auch durch eine Wandung des Aktuatorsystemgehäuse hindurch verläuft und die Hauptabtriebswelle des Aktuatorsystems bildet.

Das Aktuatorsystem kann in dem Aktuatorsystemgehäuse und außerhalb des Aktuatorgehäuses eine Aktuatorsystemkomponente oder mehrere, insbesondere unterschiedliche, Aktuatorsystemkomponenten aufweisen.

Beispielsweise kann eine Aktuatorsystemkomponente ein weiteres Getriebe oder ein Bauteil eines weiteren Getriebes sein. Das weitere Getriebe kann beispielsweise ein Umlenkgetriebe, insbesondere ein Winkelgetriebe und/oder Kegelradgetriebe, oder ein Stirnradgetriebe oder ein weiteres Spannungswellengetriebe sein oder eine Lagerung, insbesondere eine Rotationslagerung für eine Welle. Es ist auch möglich, dass das weitere Getriebe ein Stirnradgetriebe oder ein Lineargetriebe oder ein Zahnstangengetriebe oder ein Schneckengetriebe ist. In diesem Fall kann vorteilhaft vorgesehen sein, dass die Abtriebswelle den Aktuator mit dem weiteren Getriebe triebtechnisch verbindet.

Es ist alternativ oder zusätzlich vorteilhaft auch möglich, dass der Aktuator außer dem Spannungswellengetriebe ein weiteres Aktuatorgetriebe aufweist, das wenigstens teilweise, insbesondere vollständig, in dem Aktuatorgehäuse angeordnet ist. Vorzugsweise ist das weitere Aktuatorgetriebe dem Spannungswellengetriebe, insbesondere unmittelbar, triebtechnisch nachgeschaltet. Das weitere Aktuatorgetriebe kann vorteilhaft als Umlenkgetriebe, insbesondere als Winkelgetriebe ausgebildet sein, Beispielsweise ist es so möglich, eine besondere, der jeweiligen Verwendung des Aktuatorsystems angepasste Ausrichtung der Hauptabtriebswelle relativ zu dem Aktuatorsystemgehäuse zu realisieren.

Es ist auch möglich, dass das weitere Aktuatorgetriebe ein Stirnradgetriebe oder ein Lineargetriebe oder ein Zahnstangengetriebe oder ein Schneckengetriebe ist. Insbesondere können auch mehrere, insbesondere unterschiedliche, weitere Aktuatorgetriebe vorhanden sein, die triebtechnisch in Reihe geschaltet sind.

Bei einer vorteilhaften Ausführung ist das Spannungswellengetriebe als Ringgetriebe mit zwei innenverzahnten Hohlrädern, nämlich einem Circularspline und einem Dynamicspline, ausgebildet, die über eine Circularsplineverzahnung und eine Dynamicsplineverzahnung mit einem Flexspline in Zahneingriff stehen. Hierbei kann in ganz besonders vorteilhafter Weise vorgesehen sein, dass eines der Hohlräder zusätzlich eine Ankoppelverzahnung aufweist. Die Ankoppelverzahnung kann insbesondere dazu dienen, eine Bewegung auf ein nachgeschaltetes weiteres Getriebe zu übertragen. Dies erlaubt eine besonders kompakte und robuste Bauweise.

Die Ankoppelverzahnung kann insbesondere eine Außenverzahnung sein. Beispielsweise kann die Ankoppelverzahnung eine Stirnradverzahnung oder eine Kegelradverzahnung sein.

Ganz allgemein kann vorteilhaft vorgesehen sein, dass ein weiteres Getriebe dem Spannungswellengetriebe unmittelbar triebtechnisch nachgeschaltet ist. Dieses Getriebe kann als Aktuatorgetriebe in dem Aktuatorgehäuse angeordnet sein. Es ist alternativ auch möglich, dass das Getriebe wenigstens teilweise außerhalb des Aktuatorgehäuses, jedoch innerhalb des Aktuatorsystemgehäuses angeordnet ist.

Bei einer besonderen Ausführung ist wenigstens ein Bauteil des Spannungswellengetriebes gleichzeitig auch ein Bauteil des weiteren Getriebes.

Das weitere Getriebe kann beispielsweise ein Kegelrad aufweisen, das mit der Ankoppelverzahnung in Zahneingriff steht. Auf diese Weise lässt sich auf sehr kleinem Bauraum eine Umlenkung des Abtriebsdrehmoments des Spannungswellengetriebes realisieren. Es kann auch gleichzeitig und zusätzlich eine Über- oder Untersetzung realisiert werden.

Es ist, insbesondere um einen räumlichen Versatz des Abtriebs zu erreichen, auch vorteilhaft möglich, dass das weitere Getriebe dem Spannungswellengetriebe mittelbar über ein Zwischengetriebe triebtechnisch nachgeschaltet ist. Hierbei kann ein Bauteil des Spannungswellengetriebes gleichzeitig auch ein Bauteil des Zwischengetriebes sein, was zu einer besonders kompakten und robusten Ausführung beiträgt. Das Zwischengetriebe kann insbesondere als ein Stirnradgetriebe oder ein Schneckengetriebe oder ein Lineargetriebe, insbesondere ein Zahnstangengetriebe, ausgebildet sein.

Bei einer besonderen Ausführung wird ausgehend von dem Spannungswellengetriebe zunächst eine Linearbewegung erzeugt, indem eines der Hohlräder, insbesondere über eine Außenverzahnung, eine Zahnstange verschiebt. Die Verschiebung der Zahnstange kann dann wieder in eine Rotationsbewegung übersetzt werden, indem beispielsweise ein Stirnrad in eine (vorzugsweise weitere) Verzahnung der Zahnstange eingreift. Mit einer derartigen Kombination einer Zahnstange und eines Stirnrades kann ein Winkelgetriebe gebildet werden.

Der Abtrieb des Spannungswellengetriebes, insbesondere der Dynamicspline oder der Circularspline, kann vorteilhaft zusätzlich als ein außenverzahntes (als Ankoppelverzahnung) Stirnrad ausgebildet sein, das an ein zweites Stirnrad angekoppelt sein kann, während das zweite Stirnrad an ein drittes Stirnrad angekoppelt ist. Dieses aus drei Stirnrädern bestehende Getriebe kann ein besonders großes Untersetzungsverhältnis aufweisen. Außerdem wird vorteilhaft eine Verschiebung der Abtriebsgeometrie, nämlich eine Parallelverschiebung der Rotationsachse des Abtriebs des Spannungswellengetriebes erreicht. Dies ermöglicht es insbesondere, seitlich neben dem Elektromotor zusätzliche Getriebekomponenten innerhalb des zur Verfügung stehenden Bauraums anzuordnen. An die Parallelverschiebung kann sich insbesondere noch eine Rotation des Abtriebs (beispielsweise über ein Winkelgetriebe) anschließen.

Das Zwischengetriebe kann einstufig ausgebildet sein. Es ist, insbesondere zum Erreichen einer besonders großen Gesamtuntersetzung vom Motor zur Hauptabtriebswelle jedoch auch vorteilhaft möglich, dass das Zwischengetriebe mehrstufig ausgebildet ist.

Bei einer ganz besonders vorteilhaften Ausführung ist eines der Hohlräder relativ zu dem Aktuatorgehäuse gehäusefest angeordnet.

Insbesondere kann das dem Elektromotor entferntere Hohlrad relativ zu dem Aktuatorgehäuse gehäusefest angeordnet sein. Das dem Elektromotor entferntere Hohlrad kann so als gehäusefeste Lagerung für das Spannungswellengetriebe dienen, während das dem Elektromotor nähere Hohlrad als Abtrieb fungiert. Insbesondere kann das als Abtrieb fungierende Hohlrad die bereits erwähnte Ankoppelverzahnung aufweisen. Es ist auch möglich, dass eines der Hohlräder eine Außenverzahnung für ein Schneckengetriebe aufweist. Insoweit könnte eines der Hohlräder das Schneckenrad bilden, während insbesondere die Schnecke im Durchmesser vorzugsweise so klein ist, dass sie die Höhe des Hohlrades nicht übersteigt.

Der Wellengenerator des Spannungswellengetriebes kann vorteilhaft als Two-Roller ausgebildet sein. Alternativ oder zusätzlich kann vorteilhaft vorgesehen sein, dass der Wellengenerator des Spannungswellengetriebes relativ zu dem Flexspline gleitgelagert ist, um die Notwendigkeit eines Wälzlagers zu vermeiden und so eine kostengünstige Ausführung zu ermöglichen.

Die Hauptabtriebswelle des Aktuatorsystems kann vorteilhaft parallel oder senkrecht zur Rotationsachse des Rotors des Elektromotors angeordnet sein. Bei einem quaderförmigen Aktuatorsystemgehäuse kann die Hauptabtriebswelle auf diese Weise senkrecht durch die Wandung des Aktuatorsystemgehäuses austreten. Es ist jedoch nicht ausgeschlossen, dass die Hauptabtriebswelle mit einem anderen Winkel durch die Wandung des Aktuatorsystemgehäuses austritt. Bei einer im Hinblick auf eine gute Bauraumausnutzung bei gleichzeitig hohem erzielbaren Drehmoment ist die Rotationsachse des Rotors des Elektromotors parallel zur Richtung der Höhe h ausgerichtet. Dies erlaubt es, einen Elektromotor mit einem großen Außendurchmesser zu verwenden. Je größer der Außendurchmesser eines Elektromotors gewählt werden kann, umso größer ist in der Regel das maximale Drehmoment, das der Elektromotor aufbringen kann.

Bei einer ganz besonders vorteilhaften Ausführung ist der Außendurchmesser des Elektromotors in einer Richtung senkrecht zur Rotationsachse seines Rotors größer, als die Höhe des Bauraumes innerhalb des Aktuatorgehäuses in Richtung der Rotationsachse des Rotors. Wenn der innerhalb des Aktuatorgehäuses zur Verfügung stehende Bauraum beispielsweise durch einen Quader bestimmt ist, der eine Höhe aufweist, die senkrecht auf der rechteckigen Grundfläche des Quaders steht und die kleiner als die Seitenlängen der Grundfläche des Quaders ist, kann der Elektromotor insbesondere derart angeordnet sein, dass die Rotationsachse seines Abtriebs senkrecht auf der Grundfläche steht, also in Richtung der Höhe des Quaders ausgerichtet ist. Dies ermöglicht es insbesondere, den zur Verfügung stehenden Bauraum dahingehend auszunutzen, dass der Außendurchmesser des Elektromotors möglichst groß sein kann, um ein möglichst großes Abtriebsdrehmoment des Elektromotors erreichen zu können.

Ganz allgemein kann vorteilhaft vorgesehen sein, dass der Bauraum, den das Aktuatorgehäuse umgibt, die Form eines Zylinders aufweist, der eine Grundfläche und eine Höhe aufweist, wobei die Höhe senkrecht zur Grundfläche ausgerichtet ist. Um den zur Verfügung stehenden Bauraum dahingehend auszunutzen, dass der Durchmesser des Elektromotors möglichst groß sein kann, ist die Rotationsachse des Rotors des Elektromotors vorzugsweise senkrecht zur Grundfläche ausgerichtet. Die Grundfläche kann eine beliebige, insbesondere an die jeweilige Anwendung angepasste, Form aufweisen. Insbesondere kann die Grundfläche des von dem Aktuatorgehäuse umgebenen Bauraumes rechteckig ausgebildet sein. Das Aktuatorgehäuse kann insoweit, wie bereits erwähnt, quaderförmig ausgebildet sein.

Die Grundfläche, die das Aktuatorgehäuse definiert, kann eben sein. Dies ist jedoch nicht zwingend erforderlich. Beispielsweise kann das Aktuatorgehäuse, insbesondere in dem die Grundfläche definierenden Teil, eine Ausbuchtung, beispielsweise für einen Teil des Elektromotors und/oder des Spannungswellengetriebes, aufweisen. Insbesondere kann vorteilhaft vorgesehen sein, dass ein Teil des Elektromotors und/oder des Spannungswellengetriebes formschlüssig in die Ausbuchtung eingefügt ist.

Der Grundfläche gegenüberliegend kann eine zur Grundfläche parallele Deckelfläche angeordnet sein. Die Deckelfläche kann gleich oder spiegelsymmetrisch zur Grundfläche ausgebildet sein. Auch der der Deckelfläche zugeordnete Teil des Aktuatorgehäuses kann eine Ausbuchtung aufweisen. Insbesondere kann vorteilhaft vorgesehen sein, dass ein Teil des Elektromotors und/oder des Spannungswellengetriebes formschlüssig in die Ausbuchtung der Deckelfläche eingefügt ist.

Nicht nur in Bezug auf das Aktuatorgehäuse, sondern auch in Bezug auf das Aktuatorsystemgehäuse sind besondere Ausgestaltungen im Hinblick auf eine besonders gute Bauraumausnutzung vorteilhaft, die alternativ oder zusätzlich zu den oben genannten Merkmalen realisiert sein können.

Insbesondere kann im Hinblick auf eine gute Bauraumausnutzung bei gleichzeitig hohem Drehmoment vorteilhaft vorgesehen sein, dass der Bauraum, den das Aktuatorsystemgehäuse einhaust, ein Volumen V [mm3] aufweist, wobei der Bauraum eine Höhe von h [mm] aufweist und wobei gilt V [mm³] = A [mm²] h [mm] und 5.000 mm² < A < 15.000 mm².

Die Hauptabtriebswelle kann im Hinblick auf eine gute Bauraumausnutzung insbesondere parallel oder senkrecht zur Richtung der Höhe h ausgerichtet sein.

Hierbei kann vorteilhaft außerdem vorgesehen sein, dass der Bauraum, den das Aktuatorsystemgehäuse umgibt, die Form eines Zylinders aufweist, der eine Grundfläche und eine Höhe aufweist, wobei die Höhe des Bauraumes des Aktuatorsystemgehäuses senkrecht zur Grundfläche ausgerichtet ist. Außerdem kann vorteilhaft vorgesehen sein, dass die Rotationsachse des Rotors des Elektromotors senkrecht zur Grundfläche ausgerichtet ist. Die Grundfläche kann eine beliebige, insbesondere an die jeweilige Anwendung angepasste, Form aufweisen. Insbesondere kann die Grundfläche rechteckig ausgebildet sein. Das Aktuatorsystemgehäuse kann insoweit, wie bereits erwähnt, quaderförmig ausgebildet sein.

Die Grundfläche kann eben sein. Dies ist jedoch nicht zwingend erforderlich. Beispielsweise kann der der Grundfläche zugeordnete Abschnitt des Aktuatorsystemgehäuses auch eine Ausbuchtung, beispielsweise für einen Teil des Aktuatorgehäuses oder die Aktuatorsystemkomponente aufweisen. Insbesondere kann vorteilhaft vorgesehen sein, dass ein Teil des Aktuatorgehäuses oder ein Teil der Aktuatorsystemkomponente formschlüssig in die Ausbuchtung eingefügt ist.

Der Grundfläche des durch das Aktuatorsystemgehäuse definierten Bauraumes gegenüberliegend kann eine zur Grundfläche parallele Deckelfläche angeordnet sein. Die Deckelfläche kann gleich oder spiegelsymmetrisch zur Grundfläche ausgebildet sein. Auch der der Deckelfläche zugeordnete Teil des Aktuatorsystemgehäuses kann eine Ausbuchtung aufweisen. Insbesondere kann vorteilhaft vorgesehen sein, dass ein Teil des Aktuatorgehäuses oder ein Teil der Aktuatorsystemkomponente formschlüssig in diese Ausbuchtung eingefügt ist.

Bei einer ganz besonders vorteilhaften Ausführung sind das Aktuatorsystemgehäuse und/oder das Aktuatorgehäuse flüssigkeitsdicht ausgebildet. Insbesondere kann vorteilhaft vorgesehen sein, dass das Aktuatorsystemgehäuse und/oder das Aktuatorgehäuse ein Schmiermittel, insbesondere Öl, beinhaltet. Auf diese Weise ist gewährleistet, dass insbesondere das Spannungswellengetriebe stets eine ausreichende Schmierung erfährt. Insbesondere kann das Aktuatorgehäuse vollständig mit Öl aufgefüllt sein, ohne dass ein Gas im Gehäuse verbleibt. Das Aktuatorsystemgehäuse kann hingegen mit einem Gas, insbesondere mit Luft, aufgefüllt sein.

Um eine besonders gute Bauraumausnutzung bei gleichzeitig hohen übertragbaren Drehmomenten zu erreichen, ist das Spannungswellengetriebe vorzugsweise koaxial oder achsparallel zum Elektromotor angeordnet. Bei einer achsparallelen Anordnung ist ein Zwischengetriebe vorhanden, das mit dem Elektromotor einerseits und dem Spannungswellengetriebe andererseits wirkverbunden ist und das beispielsweise als Zugmitteltrieb oder als Stirnradgetriebe ausgebildet sein kann.

Bei einer besonderen Ausführung sind eine Abtriebswelle des Elektromotors und eine Antriebswelle des Spannungswellengetriebes über ein als Winkelgetriebe ausgebildetes weiteres Getriebe miteinander wirkverkoppelt.

Das Spannungswellengetriebe kann vorteilhaft beispielsweise ein Übersetzungsverhältnis im Bereich von i=120 bis i=20 oder im Bereich von i=100 bis i=20 oder im Bereich von i=80 bis i=20 oder im Bereich von i=50 bis i=20, insbesondere im Bereich von i=35 bis i=25, insbesondere von i=30 aufweisen.

Bei einer ganz besonders vorteilhaften Ausführung ist der Elektromotor als Außenläufer ausgebildet. Ein derartig ausgebildeter Elektromotor weist einen Rotor auf, der den Stator umgibt. Insbesondere kann vorteilhaft vorgesehen sein, dass der Rotor des Elektromotors unmittelbar den Wellengenerator des Spannungswellengetriebes trägt oder den Wellengenerator des Spannungswellengetriebes bildet. Um eine ganz besonders kompakte Ausführung zu erreichen kann der Elektromotor in einem als Hohlwelle ausgebildeten Wellengenerator des Spannungswellengetriebes angeordnet sein. Auf diese Weise lässt sich eine Ausführung realisieren, bei der der Elektromotor koaxial zu dem Spannungswellengetriebe angeordnet und gleichzeitig von dem Spannungswellengetriebe umgeben ist.

Der Elektromotor kann vorteilhaft als Reluktanzmotor ausgebildet sein. Bei einer solchen Ausführung treten nahezu keine Verluste im Rotor auf, woraus ein besserer Wirkungsgrad als bei herkömmlichen Asynchronmotoren resultiert. Außerdem erfolgt wegen der geringeren Verluste auch eine geringere Erwärmung im Rotor und an den Lagern.

Vor ganz besonderem Vorteil ist ein Verteilersystem, insbesondere für ein Kühlsystem, wobei das Verteilersystem einen erfindungsgemäßen Aktuator und ein Verteilerventil aufweist, welches von dem Aktuator gesteuert wird. Ein solches Verteilersystem hat den ganz besonderen Vorteil, dass eine sehr präzise Einstellung des Verteilerventils ermöglicht ist.

Der erfindungsgemäße Aktuator kann vorteilhaft insbesondere in einem Kühlsystem Verwendung finden, beispielsweise um ein Verteilersystem oder ein Umschaltventil des Kühlsystems zu steuern. Hierbei kann insbesondere vorgesehen sein, dass ein flüssiges oder gasförmiges Kühlmittel je nach gewählter Einstellung in unterschiedliche Leitungen gelenkt wird.

Von besonderem Vorteil ist ein Fahrzeug, insbesondere ein elektrisch angetriebenes Fahrzeug, das einen erfindungsgemäßen Aktuator aufweist. Hierbei dient der Aktuator vorzugsweise nicht dem unmittelbaren Vortrieb des Fahrzeuges. Vorteilhaft kann der Aktuator jedoch in unterschiedlichen Systemen des Fahrzeugs, beispielsweise in einem Kühlsystem, insbesondere in einem Akku- oder Motorkühlsystem eingesetzt werden.

Ganz allgemein ist eine Baugruppe, insbesondere Kraftfahrzeugbaugruppe oder Verbrennungsmotor oder Fahrzeuggetriebe oder Bremse, mit einer Verstellwelle und mit einer Vorrichtung zum Antreiben der Verstellwelle, die einen erfindungsgemäßen Aktuator aufweist, von besonderem Vorteil.

In besonders vorteilhafter Weise kann die Vorrichtung zum Antreiben einer Verstellwelle ein Steuerungs- und Sensormodul beinhalten. Insbesondere kann vorteilhaft vorgesehen sein, dass zur Anwendung bei unterschiedlichen Baugruppen, insbesondere Kraftfahrzeugbaugruppen, unterschiedliche Steuerungs- und Sensormodule zur Verfügung stehen, so dass eine erfindungsgemäße Vorrichtung zum Antreiben einer Verstellwelle durch Austausch des Steuerungs- und Sensormoduls auf einfache Weise an geänderte Anforderungen angepasst werden kann. In vorteilhafter Weise kann insbesondere vorgesehen sein, dass die Steuerungselektronik eines solchen Steuerungs- und Sensormoduls sowohl die Funktionselektronik, die grundsätzlich - beispielsweise zur Steuerung und/oder Regelung der Kommutierung - überhaupt nötig ist, um einen Antriebsmotor eines Aktuators betreiben zu können, als auch die eigentliche Befehlselektronik, die die gewünschten Parameter, wie Drehrichtung und/oder Drehgeschwindigkeit und/oder Drehmoment und/oder Drehstellung usw., steuert bzw. regelt, beinhaltet. In vorteilhafter Weise kann insbesondere auch vorgesehen sein, dass der oben bereits erwähnte Rotationslagesensor Bestandteil des Steuerungs- und Sensormoduls ist.

Bei einer besonders vorteilhaften Ausführung ist eine Verstellung ausschließlich bei einer vorgegebenen oder vorgebbaren Phasenlage einer Welle der Baugruppe, insbesondere Kraftfahrzeugbaugruppe, möglich. Insbesondere kann vorgesehen sein, dass die Vorrichtung, insbesondere der Antriebsmotor der Anordnung, ausschließlich bei einer vorgegebenen oder vorgebbaren Phasenlage eine Welle der Baugruppe aktivierbar ist. Auf diese Weise kann erreicht werden, dass eine Verstellung ausschließlich in hierfür günstigen Zeiträumen, beispielsweise des Arbeitstaktes eines Verbrennungsmotors, vorgenommen wird.

In vorteilhafter Weise kann vorgesehen sein, dass die Vorrichtung zum Antreiben als Teil eines Verbrennungsmotors ausgebildet ist oder als Teil eines Kraftfahrzeuggetriebes ausgebildet ist, das Antriebsenergie von einem Antriebsmotor zu wenigstens einem Rad eines Kraftfahrzeugs überträgt, oder Teil einer Kraftfahrzeugbremse ist.

In ganz besonders vorteilhafter Weise kann vorgesehen sein, dass die Verstellwelle Teil einer Ölpumpe oder einer Wasserpumpe oder eines Ventils oder Vakuumpumpe oder einer variablen Ventiltriebsteuerung eines Einlass- oder Auslassventils eines Verbrennungsmotors oder eines Umschaltventils oder eines Systems zur Zylinderabschaltung oder eines Systems zur Ventilabschaltung durch eine Drossel oder eines Systems zur Steuerung einer Klappe in einem Ansaugkanal oder eines Systems zur Steuerung einer Klappe im Abgaskanal oder eines Systems zur Zylinderbankabschaltung oder eines Systems zur Regelung von Drallklappen im Antragkanal oder eines Systems zur Steuerung einer Drosselklappe für einen Benzin- oder Dieselmotor oder eines Systems zur Steuerung eines Abgasrückführungsventils oder eines Systems zur Steuerung eines Abgasturboladers oder eines Systems zur Steuerung eines Bypasses eines Turboladers oder eines Systems zur Steuerung der Flüssigkeits- oder Luftstromklappen eines Kühlsystems oder einer Kupplungsbetätigung eines Schaltgetriebes oder einer Kupplungsbetätigung eines Doppelkupplungsgetriebes oder eines Systems zur Steuerung von Schaltübergängen oder eines Systems zur Steuerung von Ventilen in Automatik getrieben oder einer Parkbremse in Automatikgetrieben oder einer Parkbremse in einer Fahrzeugbremsanlage oder eines Systems zur Zu- oder Abschaltung eines Allradantriebs oder eines Antriebs für eine Betriebsbremse ist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Ausführungsbeispiel eines erfindungsgemäßen Aktuatorsystems,
- Fig. 2: eine Detailansicht eines zweiten Ausführungsbeispiels eines erfindungsgemäßen Aktuatorsystems,
- Fig. 3: eine Detailansicht eines dritten Ausführungsbeispiels eines erfindungsgemäßen Aktuatorsystems,
- Fig. 4: eine Detailansicht eines vierten Ausführungsbeispiels eines erfindungsgemäßen Aktuatorsystems,
- Fig. 5: eine Detailansicht eines fünften Ausführungsbeispiels eines erfindungsgemäßen Aktuatorsystems,
- Fig. 6: eine Detailansicht eines sechsten Ausführungsbeispiels eines erfindungsgemäßen Aktuatorsystems,
- Fig. 7: eine Detailansicht eines siebenten Ausführungsbeispiels eines erfindungsgemäßen Aktuatorsystems, und
- Fig. 8: eine Detailansicht eines achten Ausführungsbeispiels eines erfindungsgemäßen Aktuatorsystems.

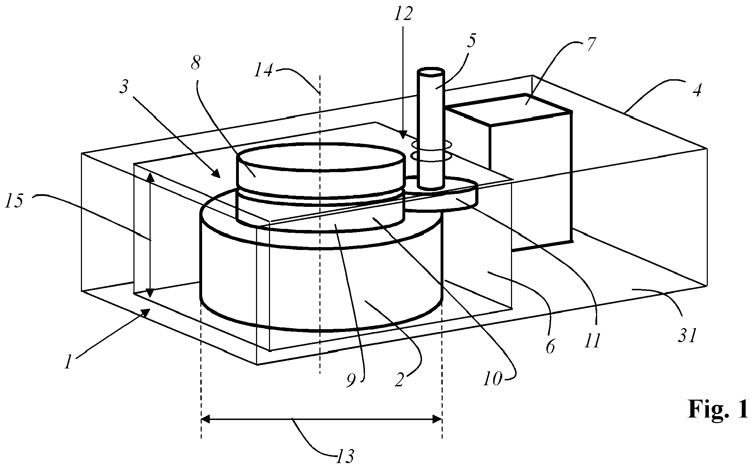

Fig. 1 zeigt ein erstes Ausführungsbeispiel eines erfindungsgemäßen Aktuatorsystems.

Das Aktuatorsystem beinhaltet einen Aktuator 1, der einen Elektromotor 2 und ein dem Elektromotor 2 triebtechnisch nachgeschaltetes Spannungswellengetriebe 3 aufweist. Das Aktuatorsystem weist ein Aktuatorsystemgehäuse 4 auf, aus dem eine Hauptabtriebswelle 5 geführt ist. Das Aktuatorsystem weist außerdem ein Aktuatorgehäuse 6 auf, wobei das Aktuatorsystemgehäuse 4 das Aktuatorgehäuse 6 vollständig einhaust. Der Elektromotor 2 und das ihm nachgeschaltete Spannungswellengetriebe 3 sind in dem Aktuatorgehäuse 6 angeordnet. In dem Aktuatorsystemgehäuse 4 ist eine Aktuatorsystemkomponente 7 außerhalb des Aktuatorgehäuses 6 angeordnet. Die Aktuatorsystemkomponente 7 kann beispielsweise eine elektronische Steuerungsvorrichtung für den Elektromotor sein.

Das Spannungswellengetriebe 3 ist als Ringgetriebe mit zwei innenverzahnten Hohlrädern, nämlich einem Circularspline 8 und einem Dynamicspline 9, ausgebildet, die über eine (nicht dargestellte) Circularsplineverzahnung und eine (nicht dargestellte) Dynamicsplineverzahnung mit einem (nicht dargestellten) Flexspline in Zahneingriff stehen. Der Elektromotor 2 treibt einen (nicht dargestellten) Wellengenerator des Spannungswellengetriebes 3 an.

Der Circularspline 8 ist als das dem Elektromotor entferntere Hohlrad relativ zu dem Aktuatorgehäuse 6 gehäusefest angeordnet. Er fungiert als gehäusefeste Lagerung für das Spannungswellengetriebe 3, während der Dynamicspline 9 als das dem Elektromotor nähere Hohlrad als Abtrieb des Spannungswellengetriebes 3 fungiert.

Der Dynamicspline 9 weist zusätzlich eine als Außenverzahnung ausgebildete Ankoppelverzahnung 10 auf, die mit einem rotierbar gelagerten Stirnrad 11 in Zahneingriff steht, so dass ein weiteres Getriebe 12, das dem Spannungswellengetriebe 3 triebtechnisch nachgeschaltet ist, gebildet ist.

Die Hauptabtriebswelle 5 ist drehfest mit dem Stirnrad 11 verbunden und verläuft sowohl durch die Wandung des Aktuatorgehäuses 6, als auch durch die Wandung des Aktuatorsystemgehäuses 4 hindurch nach außen.

Der Außendurchmesser 13 des Elektromotors 2 in einer Richtung senkrecht zu Rotationsachse 14 seines (nicht eingezeichneten) Rotors ist größer, als die Höhe 15 des Bauraumes innerhalb des Aktuatorgehäuses 6 in Richtung der Rotationsachse 14 des Rotors. Der innerhalb des Aktuatorgehäuses 6 zur Verfügung stehende Bauraum ist in diesem Beispiel durch einen Quader bestimmt ist, bei dem die Höhe 15 senkrecht auf der rechteckigen Grundfläche 31 des Quaders steht, wobei die Höhe 15 kleiner als die Seitenlängen der Grundfläche 31 des Quaders ist. Der Elektromotor 2 ist derart angeordnet, dass die Rotationsachse 14 seines Abtriebs senkrecht auf der Grundfläche 31 steht, also in Richtung der Höhe 15 des Quaders ausgerichtet ist. Dies ermöglicht es insbesondere, den zur Verfügung stehenden Bauraum dahingehend auszunutzen, dass der Außendurchmesser 13 des Elektromotors 2 möglichst groß sein kann, um ein möglichst großes Abtriebsdrehmoment des Elektromotors 2 erreichen zu können.

Bei diesem Ausführungsbeispiel ist das weitere Getriebe 12 innerhalb des Aktuatorgehäuses 6 angeordnet. Es ist durch aus auch möglich, dass das weitere Getriebe wenigstens teilweise außerhalb des Aktuatorgehäuses 6, jedoch innerhalb des Aktuatorsystemgehäuses 4 angeordnet wird und/oder dass wenigstens ein zusätzliches weiteres Getriebe wenigstens teilweise außerhalb des Aktuatorgehäuses 6, jedoch innerhalb des Aktuatorsystemgehäuses 4 angeordnet wird. Dies gilt analog auch für die weiter unten erwähnten Ausführungsbeispiele.

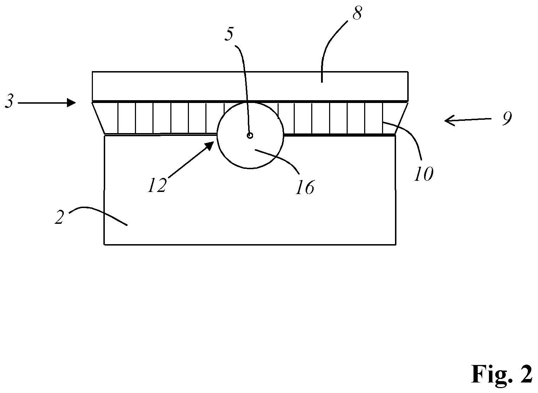

Fig. 2 zeigt eine Detailansicht eines zweiten Ausführungsbeispiels eines erfindungsgemäßen Aktuatorsystems.

Das Aktuatorsystem beinhaltet einen Aktuator 1, der einen Elektromotor 2 und ein dem Elektromotor 2 triebtechnisch nachgeschaltetes Spannungswellengetriebe 3 aufweist. Das Aktuatorgehäuse 6 ist in dieser Figur der besseren Übersicht halber nicht dargestellt.

Das Spannungswellengetriebe 3 ist als Ringgetriebe mit zwei innenverzahnten Hohlrädern, nämlich einem Circularspline 8 und einem Dynamicspline 9, ausgebildet, die über eine (nicht dargestellte) Circularsplineverzahnung und eine (nicht dargestellte) Dynamicsplineverzahnung mit einem (nicht dargestellten) Flexspline in Zahneingriff stehen. Der Elektromotor 2 treibt einen (nicht dargestellten) Wellengenerator des Spannungswellengetriebes 3 an.

Der Circularspline 8 ist als das dem Elektromotor entferntere Hohlrad relativ zu dem Aktuatorgehäuse 6 gehäusefest angeordnet und fungiert als gehäusefeste Lagerung für das Spannungswellengetriebe 3. Der Dynamicspline 9 weist zusätzlich eine als Außenverzahnung ausgebildete Ankoppelverzahnung 10 auf, die als Kegelradverzahnung ausgebildet ist und die mit einem rotierbar gelagerten Kegelrad 16 in Zahneingriff steht, so dass ein weiteres Getriebe 12, das dem Spannungswellengetriebe 3 triebtechnisch nachgeschaltet ist, gebildet ist.

Das Kegelrad 16 kann beispielsweise drehfest mit der Hauptabtriebswelle 5 verbunden sein. Es ist alternativ auch möglich, dass dem mit dem Dynamicspline 9 und dem Kegelrad 16 gebildeten Kegelradgetriebe ein zusätzliches weiteres Getriebe triebtechnisch nachgeschaltet ist.

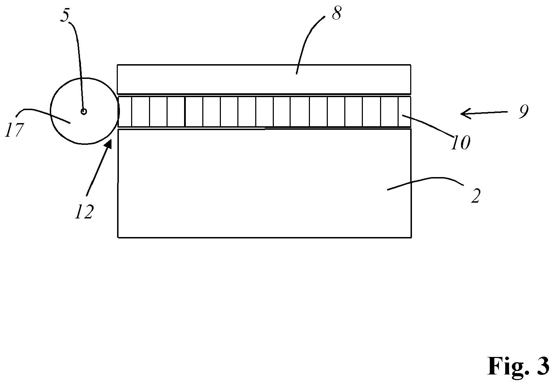

Fig. 3 zeigt eine Detailansicht eines dritten Ausführungsbeispiels eines erfindungsgemäßen Aktuatorsystems.

Das Aktuatorsystem beinhaltet einen Aktuator 1, der einen Elektromotor 2 und ein dem Elektromotor 2 triebtechnisch nachgeschaltetes Spannungswellengetriebe 3 aufweist. Das Aktuatorgehäuse 6 ist in dieser Figur der besseren Übersicht halber nicht dargestellt.

Das Spannungswellengetriebe 3 ist als Ringgetriebe mit zwei innenverzahnten Hohlrädern, nämlich einem Circularspline 8 und einem Dynamicspline 9, ausgebildet, die über eine (nicht dargestellte) Circularsplineverzahnung und eine (nicht dargestellte) Dynamicsplineverzahnung mit einem (nicht dargestellten) Flexspline in Zahneingriff stehen. Der Elektromotor 2 treibt einen (nicht dargestellten) Wellengenerator des Spannungswellengetriebes 3 an.

Der Circularspline 8 ist als das dem Elektromotor entferntere Hohlrad relativ zu dem Aktuatorgehäuse 6 gehäusefest angeordnet und fungiert als gehäusefeste Lagerung für das Spannungswellengetriebe 3. Der Dynamicspline 9 weist zusätzlich eine als Außenverzahnung ausgebildete Ankoppelverzahnung 10 auf, die als Schneckenradverzahnung ausgebildet ist und die mit einer rotierbar gelagerten Schnecke 17 in Zahneingriff steht, so dass ein weiteres Getriebe 12, nämlich ein Schneckengetriebe, gebildet ist, das dem Spannungswellengetriebe 3 triebtechnisch nachgeschaltet ist.

Die Schnecke 17 kann beispielsweise drehfest mit der Hauptabtriebswelle 5 verbunden sein. Es ist alternativ auch möglich, dass dem Schneckengetriebe ein zusätzliches weiteres Getriebe triebtechnisch nachgeschaltet ist.

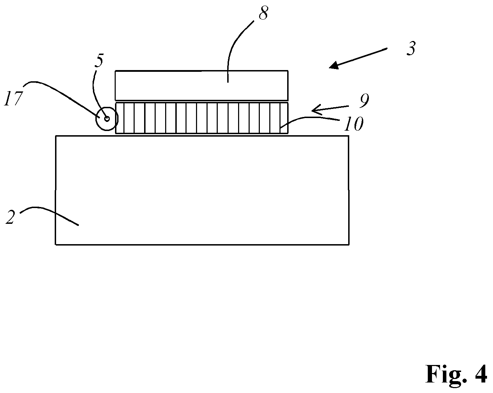

Figur 4 zeigt eine Detailansicht eines vierten Ausführungsbeispiels eines erfindungsgemäßen Aktuatorsystems. Dieses Ausführungsbeispiel weist einen ähnlichen Aufbau auf, wie das in Figur 3 dargestellte dritte Ausführungsbeispiel.

Im Unterschied zu dem in Figur 3 dargestellten dritten Ausführungsbeispiel ist der Durchmesser des Circularspline 8 und des Dynamicspline 9 kleiner, als der Außendurchmesser 13 des Elektromotors. Diese Ausführung ist daher besonders kompakt ausbildbar. Die Schnecke 17 weist einen Durchmesser auf, der kleiner ist, als die axiale Höhe des Dynamicspline 9, mit dem sie durch Zahneingriff in dessen Ankoppelverzahnung 10 wirkverbunden ist.

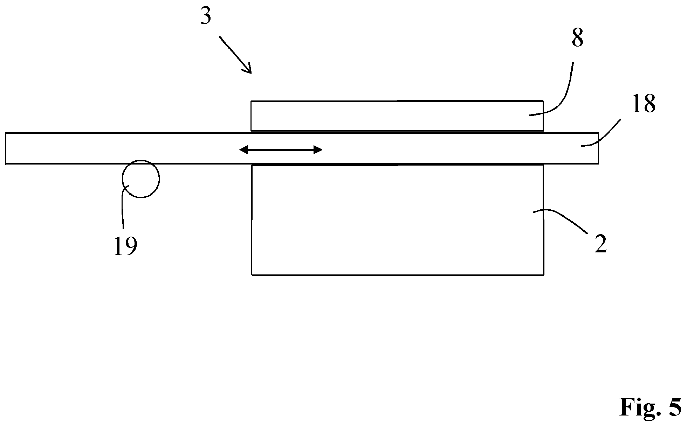

Fig. 5 zeigt eine Detailansicht eines fünften Ausführungsbeispiels eines erfindungsgemäßen Aktuatorsystems.

Das Aktuatorsystem beinhaltet einen Aktuator 1, der einen Elektromotor 2 und ein dem Elektromotor 2 triebtechnisch nachgeschaltetes Spannungswellengetriebe 3 aufweist. Das Aktuatorgehäuse 6 ist in dieser Figur der besseren Übersicht halber nicht dargestellt.

Das Spannungswellengetriebe 3 ist als Ringgetriebe mit zwei innenverzahnten Hohlrädern, nämlich einem Circularspline 8 und einem (in dieser Figur durch die Zahnstange 18 verdecktem) Dynamicspline 9, ausgebildet, die über eine (nicht dargestellte) Circularsplineverzahnung und eine (nicht dargestellte) Dynamicsplineverzahnung mit einem (nicht dargestellten) Flexspline in Zahneingriff stehen. Der Elektromotor 2 treibt einen (nicht dargestellten) Wellengenerator des Spannungswellengetriebes 3 an.

Der Circularspline 8 ist als das dem Elektromotor entferntere Hohlrad relativ zu dem Aktuatorgehäuse 6 gehäusefest angeordnet und fungiert als gehäusefeste Lagerung für das Spannungswellengetriebe 3. Der Dynamicspline 9 weist zusätzlich eine als Außenverzahnung ausgebildete Ankoppelverzahnung 10 auf, die als Stirnradverzahnung ausgebildet ist und die mit einer linear verschiebbar gelagerten Zahnstange 18 in Zahneingriff steht, so dass ein weiteres Getriebe 12, nämlich ein Lineargetriebe, das dem Spannungswellengetriebe 3 triebtechnisch nachgeschaltet ist, gebildet ist.

Die Zahnstange 18 weist außer der Verzahnung, die mit der Ankoppelverzahnung 10 in Zahneingriff steht auf der dem Elektromotor zugewandten Seite eine weitere Verzahnung auf, die mit einem rotierbar gelagerten Stirnrad 19 in Zahneingriff steht, so dass die Linearbewegung der Zahnstange 18 wieder in eine Rotation übersetzt wird, wobei die Richtung der Rotationsachse des Stirnrades 19 gegenüber der Rotationsachse des Elektromotors und des Dynamicsplines um 90 Grad gedreht ist. Falls eine solche Drehung der Rotationsachse nicht gewünscht ist, kann anstelle der weiteren Verzahnung auch vorgesehen sein, dass das Stirnrad 19 in dieselbe Verzahnung der Zahnstange 18 eingreift, in die auch die Ankoppelverzahnung 10 eingreift.

Das Stirnrad 19 kann beispielsweise drehfest mit der Hauptabtriebswelle 5 verbunden sein. Es ist alternativ auch möglich, dass dem Stirnrad 19 ein zusätzliches weiteres Getriebe triebtechnisch nachgeschaltet ist.

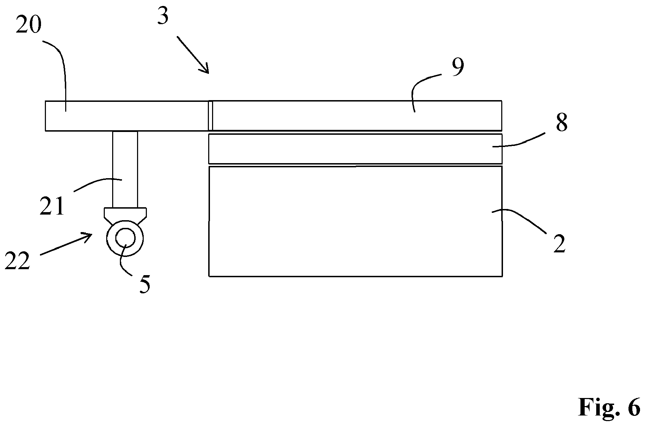

Fig. 6 zeigt eine Detailansicht eines sechsten Ausführungsbeispiels eines erfindungsgemäßen Aktuatorsystems.

Das Aktuatorsystem beinhaltet einen Aktuator 1, der einen Elektromotor 2 und ein dem Elektromotor 2 triebtechnisch nachgeschaltetes Spannungswellengetriebe 3 aufweist. Das Aktuatorgehäuse 6 ist in dieser Figur der besseren Übersicht halber nicht dargestellt.

Das Spannungswellengetriebe 3 ist als Ringgetriebe mit zwei innenverzahnten Hohlrädern, nämlich einem Circularspline 8 und einem Dynamicspline 9, ausgebildet, die über eine (nicht dargestellte) Circularsplineverzahnung und eine (nicht dargestellte) Dynamicsplineverzahnung mit einem (nicht dargestellten) Flexspline in Zahneingriff stehen. Der Elektromotor 2 treibt einen (nicht dargestellten) Wellengenerator des Spannungswellengetriebes 3 an.

Der Circularspline 8 ist bei diesem Ausführungsbeispiel als das dem Elektromotor nähere Hohlrad relativ zu dem Aktuatorgehäuse 6 gehäusefest angeordnet und fungiert als gehäusefeste Lagerung für das Spannungswellengetriebe 3. Der Dynamicspline 9 weist zusätzlich eine als Außenverzahnung ausgebildete Ankoppelverzahnung 10 auf, die als Stirnradverzahnung ausgebildet ist und die mit einem rotierbar gelagerten Stirnrad 20 in Zahneingriff steht, so dass ein weiteres Getriebe 12, das dem Spannungswellengetriebe 3 triebtechnisch nachgeschaltet ist, gebildet ist.

Das Stirnrad 20 ist über eine rotierbar gelagerte Verbindungswelle 21 triebtechnisch mit einem als Winkelgetriebe 22 ausgebildeten dritten Getriebe verbunden. Die Abtriebswelle des Winkelgetriebes 22 bildet die Hauptabtriebswelle 5. Es ist alternativ jedoch auch möglich, dass dem Winkelgetriebe 22 ein zusätzliches weiteres Getriebe triebtechnisch nachgeschaltet ist.

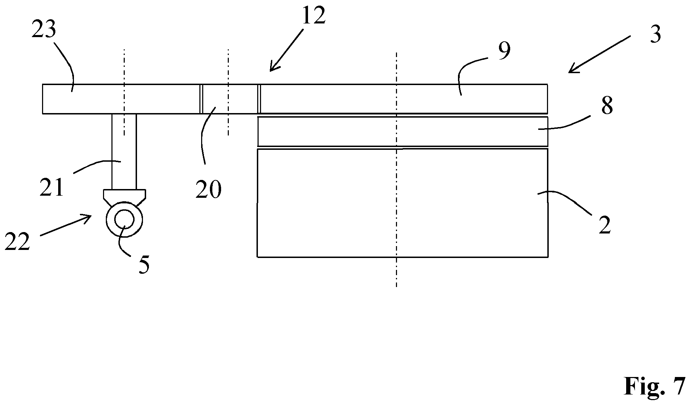

Fig. 7 zeigt eine Detailansicht eines siebenten Ausführungsbeispiels eines erfindungsgemäßen Aktuatorsystems.

Das Aktuatorsystem beinhaltet einen Aktuator 1, der einen Elektromotor 2 und ein dem Elektromotor 2 triebtechnisch nachgeschaltetes Spannungswellengetriebe 3 aufweist. Das Aktuatorgehäuse 6 ist in dieser Figur der besseren Übersicht halber nicht dargestellt.

Das Spannungswellengetriebe 3 ist als Ringgetriebe mit zwei innenverzahnten Hohlrädern, nämlich einem Circularspline 8 und einem Dynamicspline 9, ausgebildet, die über eine (nicht dargestellte) Circularsplineverzahnung und eine (nicht dargestellte) Dynamicsplineverzahnung mit einem (nicht dargestellten) Flexspline in Zahneingriff stehen. Der Elektromotor 2 treibt einen (nicht dargestellten) Wellengenerator des Spannungswellengetriebes 3 an.

Der Circularspline 8 ist bei diesem Ausführungsbeispiel als das dem Elektromotor nähere Hohlrad relativ zu dem Aktuatorgehäuse 6 gehäusefest angeordnet und fungiert als gehäusefeste Lagerung für das Spannungswellengetriebe 3. Der Dynamicspline 9 weist zusätzlich eine als Außenverzahnung ausgebildete Ankoppelverzahnung 10 auf, die als Stirnradverzahnung ausgebildet ist und die mit einem rotierbar gelagerten Stirnrad 20 in Zahneingriff steht, so dass ein weiteres Getriebe 12, das dem Spannungswellengetriebe 3 triebtechnisch nachgeschaltet ist, gebildet ist.

Das Stirnrad 20 steht in Zahneingriff mit einem weiteren, rotierbar gelagerten Stirnrad 23, so dass ein drittes Getriebe 24 gebildet ist.

Das weitere Stirnrad 23 ist über eine rotierbar gelagerte Verbindungswelle 21 triebtechnisch mit einem als Winkelgetriebe 22 ausgebildeten vierten Getriebe verbunden. Die Abtriebswelle des Winkelgetriebes 22 bildet die Hauptabtriebswelle 5. Es ist alternativ jedoch auch möglich, dass dem Winkelgetriebe 22 ein zusätzliches weiteres Getriebe triebtechnisch nachgeschaltet ist.

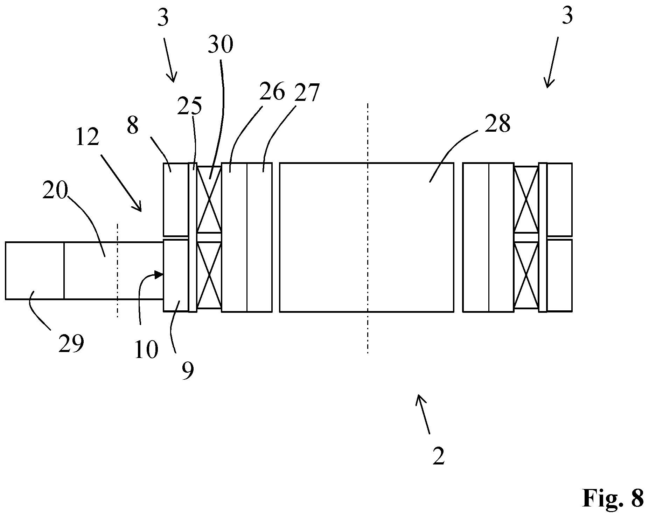

Fig. 8 zeigt eine Detailansicht eines achten Ausführungsbeispiels eines erfindungsgemäßen Aktuatorsystems.

Das Aktuatorsystem beinhaltet einen Aktuator 1, der einen Elektromotor 2 und ein dem Elektromotor 2 triebtechnisch nachgeschaltetes Spannungswellengetriebe 3 aufweist. Das Aktuatorgehäuse 6 ist in dieser Figur der besseren Übersicht halber nicht dargestellt.

Das Spannungswellengetriebe 3 ist als Ringgetriebe mit zwei innenverzahnten Hohlrädern, nämlich einem Circularspline 8 und einem Dynamicspline 9, ausgebildet, die über eine Circularsplineverzahnung und eine Dynamicsplineverzahnung mit einem Flexspline 25 in Zahneingriff stehen. Der Elektromotor 2 treibt einen Wellengenerator 26 des Spannungswellengetriebes 3 an.

Der Elektromotor 2 ist als Außenläufer ausgebildet und weist einen Rotor 27 auf, der einen gehäusefesten Stator 28 umgibt. Der Rotor 27 des Elektromotors 2 trägt unmittelbar den Wellengenerator 26 des Spannungswellengetriebes 3. Der Wellengenerator 26 ist als Hohlwelle ausgebildet, die eine elliptische Außenkontur aufweist. Der Elektromotor 2 ist insoweit von dem Wellengenerator 26 umgeben. Der Wellengenerator drückt ein radialflexibles Wälzlager 30 und den Flexspline 25 in eine elliptische Form, so dass der Flexspline 25 jeweils an zwei gegenüberliegenden Stellen mit dem Circularspline 8 und dem Dynamicspline 9 in Zahneingriff steht.

Der Circularspline 8 ist relativ zu dem Aktuatorgehäuse 6 gehäusefest angeordnet und fungiert als gehäusefeste Lagerung für das Spannungswellengetriebe 3. Der Dynamicspline 9 weist zusätzlich eine als Außenverzahnung ausgebildete Ankoppelverzahnung 10 auf, die als Stirnradverzahnung ausgebildet ist und die mit einem rotierbar gelagerten Stirnrad 20 in Zahneingriff steht, so dass ein weiteres Getriebe 12, das dem Spannungswellengetriebe 3 triebtechnisch nachgeschaltet ist, gebildet ist.

Das Stirnrad 20 kann beispielsweise drehfest mit der Hauptabtriebswelle 5 verbunden sein. Es ist alternativ auch möglich, dass dem weiteren Getriebe 12 wenigstens ein zusätzliches weiteres Getriebe 29 triebtechnisch nachgeschaltet ist, das die Hauptabtriebswelle 5 antreibt.

### Bezugszeichenliste:

- 1: Aktuator
- 2: Elektromotor
- 3: Spannungswellengetriebe
- 4: Aktuatorsystemgehäuse
- 5: Hauptabtriebswelle
- 6: Aktuatorgehäuse
- 7: Aktuatorsystemkomponente
- 8: Circularspline
- 9: Dynamicspline
- 10: Ankoppelverzahnung
- 11: Stirnrad
- 12: weiteres Getriebe
- 13: Außendurchmesser 13 des Elektromotors 2
- 14: Rotationsachse des Rotors des Elektromotors 2
- 15: Höhe
- 16: Kegelrad
- 17: Schnecke
- 18: Zahnstange
- 19: Stirnrad
- 20: Stirnrad
- 21: Verbindungswelle
- 22: Winkelgetriebe
- 23: Stirnrad
- 24: drittes Getriebe
- 25: Flexspline
- 26: Wellengenerator
- 27: Rotor
- 28: Stator
- 29: weiteres Getriebe
- 30: radialflexibles Wälzlager
- 31: Grundfläche

## Patentansprüche

1. Aktuatorsystem, das einen Aktuator beinhaltet, der einen Elektromotor und ein dem Elektromotor triebtechnisch nachgeschaltetes Spannungswellengetriebe aufweist, **dadurch gekennzeichnet, dass** das Aktuatorsystem ein Aktuatorsystemgehäuse, aus dem eine Hauptabtriebswelle geführt ist, und ein Aktuatorgehäuse aufweist, wobei das Aktuatorsystemgehäuse das Aktuatorgehäuse vollständig einhaust und wobei der Elektromotor und das ihm nachgeschaltete Spannungswellengetriebe in dem Aktuatorgehäuse angeordnet sind und wobei wenigsten eine Aktuatorsystemkomponente außerhalb des Aktuatorgehäuses in dem Aktuatorsystemgehäuse angeordnet ist.

2. Aktuatorsystem nach Anspruch 1, **dadurch gekennzeichnet, dass**
a. eine Abtriebswelle vorhanden ist, die durch eine Wandung des Aktuatorgehäuse hindurch verläuft, oder dass
b. Abtriebswelle vorhanden ist, die durch eine Wandung des Aktuatorgehäuse und durch eine Wandung des Aktuatorsystemgehäuse hindurch verläuft und die Hauptabtriebswelle des Aktuatorsystems bildet.

3. Aktuatorsystem nach Anspruch 1 oder 2, **dadurch gekennzeichnet, dass**
a. die Aktuatorsystemkomponente eine elektronische Steuerungsvorrichtung für den Elektromotor ist, oder dass
b. die Aktuatorsystemkomponente ein weiteres Getriebe oder ein Bauteil eines weiteren Getriebes ist oder dass
c. die Aktuatorsystemkomponente ein weiteres Getriebe oder ein Bauteil eines weiteren Getriebes ist, wobei die Abtriebswelle den Aktuator mit dem weiteren Getriebe triebtechnisch verbindet.
d. die Aktuatorsystemkomponente eine Lagerung, insbesondere eine Rotationslagerung für eine Welle, ist.

4. Aktuatorsystem nach einem der Ansprüche 1 bis 3, **dadurch gekennzeichnet, dass**
a. der Aktuator ein weiteres Aktuatorgetriebe aufweist, das wenigstens teilweise, insbesondere vollständig, in dem Aktuatorgehäuse angeordnet ist, oder dass
b. der Aktuator ein weiteres Aktuatorgetriebe aufweist, das wenigstens teilweise, insbesondere vollständig, in dem Aktuatorgehäuse angeordnet ist, wobei das weitere Aktuatorgetriebe dem Spannungswellengetriebe, insbesondere unmittelbar, triebtechnisch nachgeschaltet ist, oder dass
c. der Aktuator ein weiteres Aktuatorgetriebe aufweist, das wenigstens teilweise, insbesondere vollständig, in dem Aktuatorgehäuse angeordnet ist und das weitere Aktuatorgetriebe ein Umlenkgetriebe, insbesondere ein Winkelgetriebe, ist, oder dass
d. der Aktuator ein weiteres Aktuatorgetriebe aufweist, das wenigstens teilweise, insbesondere vollständig, in dem Aktuatorgehäuse angeordnet ist und das ein Stirnradgetriebe oder ein Lineargetriebe oder ein Zahnstangengetriebe oder ein Schneckengetriebe ist.

5. Aktuatorsystem nach einem der Ansprüche 1 bis 4, **dadurch gekennzeichnet, dass**
a. das Spannungswellengetriebe als Ringgetriebe mit zwei innenverzahnten Hohlrädern, nämlich einem Circularspline und einem Dynamicspline, ausgebildet ist, die über eine Circularsplineverzahnung und eine Dynamicsplineverzahnung mit einem Flexspline in Zahneingriff stehen, oder dass
b..das Spannungswellengetriebe als Ringgetriebe mit zwei innenverzahnten Hohlrädern, nämlich einem Circularspline und einem Dynamicspline, ausgebildet ist, die über eine Circularsplineverzahnung und eine Dynamicsplineverzahnung mit einem Flexspline in Zahneingriff stehen, wobeieines der Hohlräder zusätzlich eine Ankoppelverzahnung aufweist, oder dass
c. das Spannungswellengetriebe als Ringgetriebe mit zwei innenverzahnten Hohlrädern, nämlich einem Circularspline und einem Dynamicspline, ausgebildet ist, die über eine Circularsplineverzahnung und eine Dynamicsplineverzahnung mit einem Flexspline in Zahneingriff stehen, wobeieines der Hohlräder zusätzlich eine, insbesondere als Außenverzahnung ausgebildete, Ankoppelverzahnung aufweist, die eine Stirnradverzahnung oder eine Kegelradverzahnung ist.

6. Aktuatorsystem nach einem der Ansprüche 1 bis 5, **dadurch gekennzeichnet, dass**
a. ein weiteres Getriebe dem Spannungswellengetriebe unmittelbar triebtechnisch nachgeschaltet ist, oder dass
b. ein weiteres Getriebe dem Spannungswellengetriebe unmittelbar triebtechnisch nachgeschaltet ist, wobei wenigstens ein Bauteil des Spannungswellengetriebes gleichzeitig auch ein Bauteil des weiteren Getriebes ist, oder dass
c. ein weiteres Getriebe dem Spannungswellengetriebe unmittelbar triebtechnisch nachgeschaltet ist, wobei das weitere Getriebe ein Kegelrad aufweist, das mit der Ankoppelverzahnung in Zahneingriff steht, oder dass
d. ein weiteres Getriebe dem Spannungswellengetriebe mittelbar über ein Zwischengetriebe triebtechnisch nachgeschaltet ist, oder dass
e. ein weiteres Getriebe dem Spannungswellengetriebe mittelbar über ein Zwischengetriebe triebtechnisch nachgeschaltet ist, wobei wenigstens ein Bauteil des Spannungswellengetriebes gleichzeitig auch ein Bauteil des Zwischengetriebes ist, oder dass
f. ein weiteres Getriebe dem Spannungswellengetriebe mittelbar über ein Zwischengetriebe triebtechnisch nachgeschaltet ist, wobei das Zwischengetriebe ein Stirnradgetriebe oder ein Lineargetriebe, insbesondere ein Zahnstangengetriebe, oder ein Schneckengetriebe ist, oder dass
g. ein weiteres Getriebe dem Spannungswellengetriebe mittelbar über ein Zwischengetriebe triebtechnisch nachgeschaltet ist, wobei das Zwischengetriebe mehrstufig ausgebildet ist.

7. Aktuatorsystem nach Anspruch 5 oder 6, **dadurch gekennzeichnet, dass**
a. eines der Hohlräder relativ zu dem Aktuatorgehäuse gehäusefest angeordnet ist, oder dass
b. das dem Elektromotor entferntere Hohlrad relativ zu dem Aktuatorgehäuse gehäusefest angeordnet ist, oder dass
c. das dem Elektromotor entferntere Hohlrad relativ zu dem Aktuatorgehäuse gehäusefest angeordnet ist und das dem Elektromotor nähere Hohlrad als Abtrieb des Spannungswellengetriebes fungiert.

8. Aktuatorsystem nach einem der Ansprüche 1 bis 7, **dadurch gekennzeichnet, dass**
a. der Außendurchmesser des Elektromotors in einer Richtung senkrecht zu Rotationsachse seines Rotors größer ist, als die Außenabmessung des Aktuators in Richtung der Rotationsachse des Rotors, und/oder dass
b. die Hauptabtriebswelle parallel zur Rotationsachse des Rotors des Elektromotors angeordnet ist, und/oder dass
c. die Rotationsachse des Rotors des Elektromotors parallel zur Richtung der Höhe h ausgerichtet ist.

9. Aktuatorsystem nach einem der Ansprüche 1 bis 8, **dadurch gekennzeichnet, dass**
a. der Bauraum, den das Aktuatorsystemgehäuse einhaust, ein Volumen V [mm³] aufweist, wobei der Bauraum eine Höhe von h [mm] aufweist und wobei gilt V [mm³] = A [mm²] h [mm] und 5.000 mm² < A < 15.000 mm², und/oder dass
b. der Bauraum die Form eines Zylinders aufweist, der eine Grundfläche aufweist, wobei die Höhe senkrecht zur Grundfläche ausgerichtet ist und wobei die Rotationsachse des Rotors des Elektromotors senkrecht zur Grundfläche ausgerichtet ist, und/oder dass
c. die Hauptabtriebswelle parallel oder senkrecht zur Richtung der Höhe h ausgerichtet ist, und/oder dass
d. das Aktuatorsystemgehäuse quaderförmig ausgebildet ist und/oder dass das Aktuatorgehäuse quaderförmig ausgebildet ist, und/oder dass
e. das Aktuatorsystemgehäuse quaderförmig ausgebildet ist, jedoch im Bereich einer Ausbuchtung von der Quaderform abweicht, und/oder dass das Aktuatorgehäuse quaderförmig ausgebildet ist, jedoch im Bereich einer Ausbuchtung von der Quaderform abweicht, und/oder dass
f. das Aktuatorsystemgehäuse und/oder das Aktuatorgehäuse flüssigkeitsdicht ausgebildet sind.

10. Aktuatorsystem nach einem der Ansprüche 1 bis 9, **dadurch gekennzeichnet, dass**
a. das Aktuatorsystemgehäuse und/oder das Aktuatorgehäuse ein, insbesondere flüssiges Schmiermittel, insbesondere Öl, beinhaltet, oder dass
b. das Aktuatorsystemgehäuse und/oder das Aktuatorgehäuse wenigstens zur Hälfte, insbesondere vollständig, mit einem, insbesondere flüssigen Schmiermittel, insbesondere Öl, aufgefüllt ist.

11. Aktuatorsystem nach einem der Ansprüche 1 bis 10, **dadurch gekennzeichnet, dass**
a. ein Wellengenerator des Spannungswellengetriebes als Two-Roller ausgebildet ist oder dass ein Wellengenerator des Spannungswellengetriebes relativ zu dem Flexspline gleitgelagert ist, und/oder dass
b. das Spannungswellengetriebe koaxial zum Elektromotor angeordnet ist, und/oder dass
c. das Spannungswellengetriebe achsparallel zum Elektromotor angeordnet ist, und/oder dass
d. eine Abtriebswelle des Elektromotors und eine Antriebswelle des Spannungswellengetriebes über ein als Winkelgetriebe ausgebildetes weiteres Getriebe miteinander wirkverkoppelt sind, und/oder dass
e. das Spannungswellengetriebe ein Übersetzungsverhältnis im Bereich von i=120 bis i=20, insbesondere im Bereich von i=80 bis i=25, insbesondere im Bereich von i=50 bis i=20, insbesondere im Bereich von i=35 bis i=25, insbesondere von i=30 aufweist.

12. Aktuatorsystem nach einem der Ansprüche 1 bis 11, **dadurch gekennzeichnet, dass**
a. der Elektromotor als Außenläufer ausgebildet ist, oder dass
b. der Elektromotor als Außenläufer ausgebildet ist, wobei der Elektromotor von dem Spannungswellengetriebe umgeben ist, oder dass
c. der Elektromotor als Außenläufer ausgebildet ist, wobei der Rotor des Elektromotors unmittelbar den Wellengenerator des Spannungswellengetriebes trägt oder den Wellengenerator des Spannungswellengetriebes bildet, oder dass
der Elektromotor als Außenläufer und als Reluktanzmotor ausgebildet ist.

13. Verteilersystem, insbesondere für ein Kühlsystem, wobei das Verteilersystem ein Verteilerventil aufweist, welches von einem Aktuatorsystem nach einem der Ansprüche 1 bis 12 gesteuert ist.

14. Kühlsystem, das ein Aktuatorsystem nach einem der Ansprüche 1 bis 12 aufweist, oder Fahrzeug, insbesondere elektrisch angetriebenes Fahrzeug, das ein Aktuatorsystem nach einem der Ansprüche 1 bis 12 aufweist

15. Baugruppe, insbesondere Kraftfahrzeugbaugruppe oder Verbrennungsmotor oder Fahrzeuggetriebe oder Bremse, mit einer Verstellwelle und mit einer Vorrichtung zum Antreiben der Verstellwelle, **dadurch gekennzeichnet, dass** die Vorrichtung ein Aktuatorsystem nach einem der Ansprüche 1 bis 12 aufweist.
